(19) Europäisches Patentamt
European Patent Office
Office européen des brevets

(11) Publication number : **0 499 329 B1**

(12) # EUROPEAN PATENT SPECIFICATION

(45) Date of publication of patent specification : **04.05.94 Bulletin 94/18**

(51) Int. Cl.$^5$ : **B01J 31/18,** B01J 31/24, C07F 9/58, C07F 9/6509, C07F 9/6521

(21) Application number : **92200389.2**

(22) Date of filing : **11.02.92**

(54) **Carbonylation catalyst system.**

(30) Priority : **30.05.91 GB 9111583**
**15.02.91 GB 9103214**

(43) Date of publication of application :
**19.08.92 Bulletin 92/34**

(45) Publication of the grant of the patent :
**04.05.94 Bulletin 94/18**

(84) Designated Contracting States :
**BE DE ES FR GB IT NL**

(56) References cited :
**EP-A- 0 203 286**
**EP-A- 0 218 970**
**EP-A- 0 283 616**
**EP-A- 0 305 012**
**EP-A- 0 441 447**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Klusener, Peter Anton August**
**Badhuisweg 3**
**NL-1031 CM Amsterdam (NL)**
Inventor : **Drent, Eit**
**Badhuisweg 3**
**NL-1031 CM Amsterdam (NL)**
Inventor : **Stil, Hans Arie**
**Badhuisweg 3**
**NL-1031 CM Amsterdam (NL)**
Inventor : **Arnoldy, Peter**
**Badhuisweg 3**
**NL-1031 CM Amsterdam (NL)**
Inventor : **Suykerbuyk, Jacoba Catherina Lucia Johanna**
**Badhuisweg 3**
**NL-1031 CM Amsterdam (NL)**
Inventor : **Verbrugge, Pieter Adriaan**
**Badhuisweg 3**
**NL-1031 CM Amsterdam (NL)**

EP 0 499 329 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a novel catalyst system comprising a polyphosphine, to certain novel polyphosphines, and to the use of the catalyst system in the carbonylation of ethylenically or acetylenically unsaturated compounds.

Many processes are known in the art for the carbonylation of olefinically or acetylenically unsaturated compounds. A review of such processes is provided by J. Falbe, "New Syntheses with Carbon Monoxide", Springer-Verlag, Berlin Heidelberg New York, 1980. Typically the processes involve the reaction of an olefinically or acetylenically unsaturated compound with carbon monoxide and, in some cases, hydrogen or a nucleophilic compound having a removable hydrogen atom, in the presence of a carbonylation catalyst system. In many instances, the carbonylation catalyst system comprises a source of a Group VIII metal and a ligand such as a phosphine.

One type of catalyst system which has been disclosed in recent years comprises a source of a Group VIII metal and a pyridyl phosphine.

Kurti Kurtev et al, Journal of the Chemical Society, Dalton Transactions, 1980, pages 55 to 58 disclose catalyst systems comprising a rhodium or ruthenium compound and a pyridyl phosphine, and their use in the carbonylation of hex-1-ene.

European patent application publication number EP-A1-0259914 discloses catalyst systems comprising a palladium compound, a pyridyl phosphine, an acid and a quinone and their use in the carbonylation of olefins to afford polymers.

European patent application publication number EP-A1-0271144 discloses the use of catalyst systems comprising a palladium compound, a pyridyl phosphine and an acid in the carbonylation of acetylenes with hydroxyl-containing compounds.

European patent application publication number EP-A1-0282142 discloses the use of catalyst systems comprising a palladium compound, a pyridyl phosphine and an acid in the carbonylation of olefins with hydroxyl-containing compounds.

European patent application publication number EP-A1-0386833 discloses catalyst systems comprising a palladium compound and a (substituted-2-pyridyl) phosphine. As suitable substituents, hydroxyl, amino, amido, cyano, acyl, acyloxy, hydrocarbyl and hydrocarbyloxy groups; and halogen atoms are mentioned.

None of the afore-mentioned references describes experiments in which a catalyst system comprising a polyphosphino-substituted N-heteroaryl compound is used.

Newkome et al, J. Org. Chem., 43, 947 (1978), disclose the preparation of 2,6-bis(diphenylphosphino) pyridine.

It has now been found that carbonylation reactions can proceed at an extremely high rate using a catalyst system comprising certain polyphosphino-substituted N-heteroaryl compounds, particularly at a low ratio of the phosphine ligand to the catalyst metal component. Moreover, beta-carbonylated products may be obtained with remarkably high selectivity when an alpha-unsaturated hydrocarbon, in particular propyne, is carbonylated using such catalyst systems.

Accordingly, the present invention provides a catalyst system, which comprises

a) a source of a Group VIII metal, and

b) a polyphosphine of general formula:

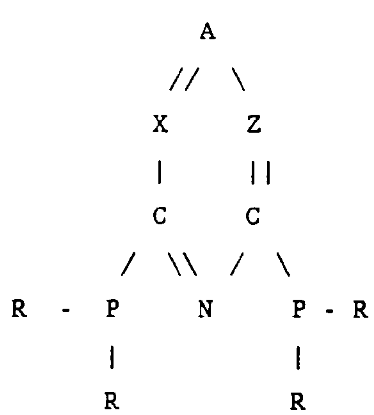

(I)

in which

each R is independently selected from an optionally substituted alkyl, cycloalkyl, aryl or heteroaryl group;

and

each of A, X and Z is independently selected from a nitrogen atom, a CH group, a group of formula C-$PR_2$ with R being defined as hereinbefore, and a group of formula CR' , wherein R' represents a hydroxyl group, an amino group, an amido group, a cyano group, an acyl group, an acyloxy group, a halogen atom, an optionally substituted hydrocarbyl group, an optionally substituted heteroaryl group or an optionally substituted hydrocarbyloxy group, it also being possible for two adjacent CR' groups to form a ring; or an acid addition salt thereof.

Catalyst systems comprising a source of a Group VIII metal and a polyphosphine of general formula (I), or a salt thereof, have been found to afford the carbonylation of propyne to proceed at a rate as high as 100,000 moles of converted propyne per gram atom of palladium per hour at a reaction temperature of 45 °C. Moreover, excellent conversion rates could be obtained using a catalyst system having a relatively low ratio between the polyphosphine and palladium. Besides, the present catalyst system has been found to afford beta-carbonylated products from alpha-unsaturated hydrocarbons, such as propyne with very high selectivity of 99.9 % and above.

Without wishing to be bound by theory, it is believed that sterical constraint due to the N-aromatic six-membered ring, precludes the polyphosphine of general formula (I) from coordinating to a single Group VIII metal atom in a P,P-bidentate mode. Accordingly, it is surprising that the present catalyst systems are effective when comprising lower ratios of phosphine ligand to palladium as compared with other monodentate phosphine ligands. It is further believed that the second phosphino group exerts a steric effect during the carbonylation of alpha-unsaturated compounds, thereby favouring the formation of beta-carbonylated products.

Polyphosphines of the general formula (I) may be thought as derived from an N-aromatic six-membered ring having at least one nitrogen ring atom adjacent to two carbon atoms each carrying a phosphino substituent. Examples of N-aromatics constituting a suitable ring core for the polyphosphines of general formula (I), include pyridine, pyrimidine, pyrazine, isoquinoline, 1,3,5-triazine, 1,2,4-triazine, and quinazoline.

A preferred example is pyridine, i.e. in formula (I), each of X, Z, and A is independently selected from a CH group and a group of formula CR'. Further preferred examples include pyrimidine and 1,3,5-triazine, especially when being substituted with three phosphino groups at the 2-, 4-, and 6-positions, i.e. in formula (I), at least one of X and Z is nitrogen, and A is a group C-$PR_2$.

When reference is made in this specification to an optionally substituted group, generally the group may be substituted with one or more, for example one, two or three, substituents selected from a halogen atom, an alkyl group, an aryl, a haloalkyl group, an alkoxy group and a haloalkoxy group.

Where reference is made to an amino group, it preferably means the group $NH_2$ or an alkyl or dialkylamino group.

An acyl group may be, for example, an alkanoyl group such as acetyl.

An amido group may be, for example, an acylamino group such as acetamido.

A ring formed by two adjacent CR' groups is preferably an optionally substituted hydrocarbyl ring, for example an optionally substituted phenyl ring. Examples of N-aromatics having two adjacent CR' groups which form a ring are isoquinoline and quinazoline.

When reference is made to an optionally substituted hydrocarbyl or hydrocarbyloxy group, the hydrocarbyl moiety preferably represents an alkyl group, a cycloalkyl group or a phenyl group.

An alkyl group preferably has up to 20 carbon atoms, more preferably up to 12 carbon atoms, especially from 1 to 4 carbon atoms. For example an alkyl group may be a methyl, ethyl, n-propyl, iso-propyl, n-butyl, iso-butyl or tert-butyl group.

A cycloalkyl group preferably has from 3 to 6 carbon atoms.

A halogen atom preferably means a fluorine, chlorine or bromine atom.

An aryl group is preferably a phenyl or naphthyl group.

A heteroaryl group may be derived from any of the afore-mentioned N-aromatics, but may also comprise other hetero atoms such as oxygen, and/or be a five- or seven-membered ring.

A heteroaryl group may specifically be a radical derived from a compound of above general fomula (I) by abstraction of a hydrogen atom from any CH group represented by A, X, or Z. When such a heteroaryl group is represented by R, the above formula (I) represents oligomeric compounds comprising chains of repeating phosphino pyridyl moieties interconnected by bridging phosphino groups, as in bis[6-(diphenylphosphino) 2-pyridyl] phenyl phosphine or 2,6-bis([6-(diphenylphosphino) 2-pyridyl] phenyl phosphino) pyridine. When such a heteroaryl group is represented by R', the above formula (I) represents bi-heteroaryl compounds carrying at least four phosphino substituents, as in 4,4'-bi[2,6-bis(diphenylphosphino) pyridyl].

Preferably each group R' is independently selected from a halogen atom, a $C_{1-4}$ alkyl group and a $C_{1-4}$ alkoxy group. More preferably, each group R' represents a $C_{1-4}$ alkyl group.

Preferably each group R of the phosphino substituents independently represents an optionally substituted phenyl group.

Most preferably, the polyphosphine of general formula (I) is a 2,6-bis(dihydrocarbylphosphino) pyridine, especially a 2,6-bis(diarylphosphino) pyridine.

Examples of polyphosphines of general formula (I) are: 2,6-bis(diphenylphosphino) pyridine, 2,6-bis(di-p-tolylphosphino) pyridine, 2,6-bis(methylphenylphosphino) pyridine, 2,6-bis(dicyclohexylphosphino) pyridine, 2,6-bis(di-p-methoxyphenylphosphino) pyridine, 3,4'-bi[2,6-bis(diphenyl phosphino) pyridyl], 2,6-bis(diphenylphosphino) pyrazine, 2,2'-bi(3,5-bis(diphenylphosphino) pyrazine], 1,3-bis(diphenylphosphino) isoquinoline, 2,4-bis(diphenylphosphino) 1,3,5-triazine, 2,4,6-tris(diphenylphosphino) 1,3,5-triazine, 2-chloro 4,6-bis(diphenylphosphino) 1,3,5-triazine, 1,3-bis(diphenylphosphino) quinazoline, 2,4-bis(diphenylphosphino) pyrimidine, and 2,4,6-tris(diphenylphosphino) pyrimidine.

Preferred acid addition salts of the polyphosphines of general formula (I) include salts with sulphuric acid; a sulphonic acid, e.g. an optionally substituted hydrocarbylsulphonic acid such as an optionally substituted arylsulphonic acid, e.g. benzenesulphonic acid, p-toluenesulphonic acid or naphthalenesulphonic acid, an optionally substituted alkylsulphonic acid such as an alkylsulphonic acid, e.g. methanesulphonic acid or t-butylsulphonic acid, or a substituted alkyl sulphonic acid such as 2-hydroxy-propanesulphonic acid, trifluoromethanesulphonic acid, chlorosulphonic acid or fluorosulphonic acid; a phosphonic acid, e.g. orthophosphonic acid, pyrophosphonic acid or benzenephosphonic acid; a carboxylic acid, e.g. chloroacetic acid, dichloroacetic acid, trichloroacetic acid, trifluoroacetic acid, oxalic acid or terephthalic acid; or a perhalic acid such as perchloric acid.

Examples of Group VIII metals are iron, cobalt, nickel, ruthenium, rhodium, palladium, iridium and platinum.

The catalyst system according to the invention preferably comprises a source of palladium.

The source of Group VIII metal may be, for example, the metallic element or a compound of the Group VIII metal. The source of a Group VIII metal is preferably a compound of the Group VIII metal, most preferably a compound of palladium.

Examples of compounds of Group VIII metals include salts, for example salts of nitric acid; sulphuric acid; carboxylic acids such as alkane carboxylic acids having not more than 12 carbon atoms e.g. acetic acid; and hydrohalic acids. Other examples of salts are salts of the acids mentioned above in relation to the formation of acid addition salts by the polyphosphines of general formula (I). Since halide ions can be corrosive, salts of hydrohalic acids are not preferred. Other examples of compounds of Group VIII metals include complexes, such as complexes with beta-carbonyl enolates (e.g. acetylacetonate), phosphines (e.g. a phosphine of general formula I) and/or carbon monoxide. For example the compound of a Group VIII metal may be palladium acetylacetonate, tetrakistriphenylphosphinepalladium, bis-tri-o-tolylphosphinepalladium acetate, bis-diphenyl-2-pyridylphosphinepalladium acetate, tetrakis-diphenyl-2-pyridylphosphinepalladium, bis-di-o-tolylpyridylphosphinepalladium acetate or bis-diphenylpyridylphosphinepalladium sulphate.

The number of moles of polyphosphine of general formula (I) per gram atom of Group VIII metal in the catalyst system according to the invention is not critical. It will depend upon the particular source of Group VIII metal and the particular reactants to be carbonylated. Conveniently the ratio of the number of moles of polyphosphine of general formula (I) per gram atom of Group VIII metal is in the range of from 1 to 50. A ratio in the range of from 2 to 20 is particularly preferred in providing very high carbonylation rates at economic use of the polyphosphine ligand. As the polyphosphine is believed to coordinate as a P-monodentate ligand, these ratios refer to the number of moles of the compounds of general formula (I) whether comprising two or more phosphino groups. Of course, compounds of formula (I) comprising a plurality of phosphino-substituted N-aromatic moieties in case R and/or R' represents a heteroaryl group having formula (I) as indicated above, may coordinate to a plurality of Group VIII metal atoms, and accordingly can be used at a lower ligand to metal ratio.

The catalyst system according to the invention preferably further comprises a protonic acid. The function of the protonic acid is to provide a source of protons. The protonic acid may also provide a source of anions for the palladium complex catalytically active in, for example, the carbonylation of propyne, which complex is believed to be of a cationic nature. Preferred anions are weakly or non-coordinating to the palladium cation, and accordingly preferably derived from a protonic acid having a pKa below 2 (as measured in water at 18 °C). The protonic acid may be added as such, or be generated in situ, for example, by interaction of a Lewis acid such as $BF_3$, $AsF_5$, $SbF_5$, $PF_5$, $TaF_5$ or $NbF_5$ with a Broensted acid such as, for example, a hydrohalogenic acid, water or an alkanol, such as methanol being one of the reactants in the preparation of methyl methacrylate. Preferably the protonic acid is one of those referred to hereinabove in relation to the formation of acid addition salts by the polyphosphines of general formula (I). It may also be, for example, an acidic ion exchange resin, for example a sulphonated ion exchange resin, or a boric acid derivative such as $H[B(O_2C_6H_4)_2]$ or $H[B(OC_6H_4CO_2)_2]$.

It will be appreciated that a catalyst system comprising an acid addition salt of a polyphosphine of general

formula (I), inevitably comprises a protonic acid.

When the catalyst system comprises a protonic acid, the ratio of the number of equivalents of protonic acid per equivalent of polyphosphine of general formula (I) may vary over a wide range. The optimal ratio of protonic acid to polyphosphine of general formula (I) will depend upon the particular reaction in which the catalyst composition is to be used. Conveniently the number of equivalents of protonic acid per equivalent of polyphosphine of general formula (I) will be in the range of from 0.1 to 50, preferably from 0.5 to 5.

The catalyst system according to the invention is conveniently constituted in a liquid phase. The liquid phase may be formed by one or more of the reactants with which the catalyst system is to be used. Alternatively, it may be formed by a solvent. It may also be formed by one of the components of the catalyst system.

The catalyst system according to the invention may be homogeneous or heterogeneous. Most preferably it is homogeneous.

The catalyst system according to the invention may be generated by any convenient method. Thus it may be prepared by combining a Group VIII metal compound, a polyphosphine of general formula (I) and, if appropriate, a protonic acid, in a liquid phase. Alternatively, it may be prepared by combining a Group VIII metal compound and an acid addition salt of general formula (I) in a liquid phase. Alternatively, it may be prepared by combining a Group VIII metal compound which is a complex of a Group VIII metal with a polyphosphine of general formula (I), and if appropriate, a protonic acid, in a liquid phase.

As has been stated above, 2,6-bis(diphenylphosphino) pyridine has been disclosed in Newkome et al, J. Org. Chem., 43, 947 (1978). The other polyphosphines of general formula (I) are believed to be novel.

The polyphosphines of general formula (I) may be prepared by a process which comprises reacting a compound of the general formula:

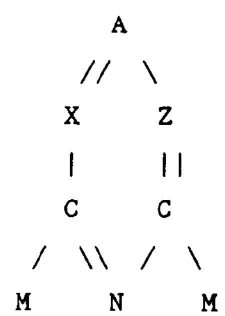

(II)

or

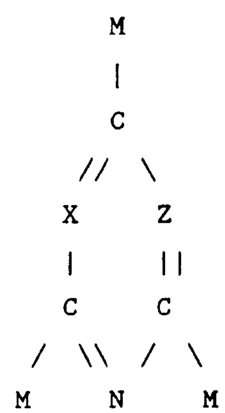

(III)

in which M represents either a metal atom or a leaving atom or group, with two or three equivalents of an appropriate compound of general formula M'-PRR (IV), in which M' represents either a leaving atom or group, or a metal atom, optionally followed by forming an acid addition salt. It will be appreciated that when M represents a metal atom, the appropriate compound of general formula (IV) is one wherein M' represents a leaving atom or group. Similarly, when M represents a leaving atom or group, the appropriate compound of formula (IV) is one wherein M' represents a metal atom. The reaction between the compound of formula (II) or (III) and the compound of formula (IV) may conveniently be effected in the presence of a solvent such as liquid ammonia, a hydrocarbon, or an ether at a temperature in the range of from -80 to 100 °C.

The polyphosphines of general formula (I) may also be prepared by a method analogous to the process described in our co-pending British patent application number 9103214.4 filed on 15th February 1991 (EP-A-499328).

As has been stated above, it has surprisingly been found that compositions according to the invention are highly selective in the carbonylation of unsaturated hydrocarbons.

Accordingly, the invention further provides the use of a catalyst composition as defined hereinbefore in the carbonylation of an acetylenically or olefinically unsaturated hydrocarbon.

According to another aspect, the invention provides a process for the carbonylation of an acetylenically or olefinically unsaturated compound, which comprises reacting an acetylenically or olefinically unsaturated compound in a liquid phase with carbon monoxide in the presence of a catalyst system as defined above.

An olefinically unsaturated compound is preferably a substituted or unsubstituted alkene or cycloalkene having from 2 to 30, preferably from 3 to 20 carbon atoms per molecule.

An acetylenically unsaturated compound is preferably a substituted or unsubstituted alkyne having from 2 to 20, especially from 2 to 10 carbon atoms per molecule.

The acetylenically or olefinically unsaturated compound may contain one or more acetylenic or olefinic bonds, for example one, two or three acetylenic or olefinic bonds.

An olefin or acetylene may be substituted by, for example, a halogen atom, a cyano group, an acyl group such as acetyl, an acyloxy group such as acetoxy, an amino group such as dialkylamino, an alkoxy group such as methoxy, a haloalkyl group such as trifluoromethyl, a haloalkoxy group such as trifluoromethoxy, an amido group such as acetamido, or a hydroxy group. Some of these groups may take part in the reaction, depending upon the precise reaction conditions. For example, lactones may be obtained by carbonylating certain acetylenically unsaturated alcohols, for example 3-butyn-1-ol, 4-pentyn-1-ol or 3-pentyn-1-ol. Thus 3-butyn-1-ol may be converted into alpha-methylene-gamma-butyrolactone.

Examples of alkynes are: ethyne, propyne, phenylacetylene, 1-butyne, 2-butyne, 1-pentyne, 1-hexyne, 1-heptyne, 1-octyne, 2-octyne, 4-octyne, 1,7-octadiyne, 5-methyl-3-heptyne, 4-propyl-2-pentyne, 1-nonyne, benzylethyne and cyclohexylethyne.

Examples of alkenes are: ethene, propene, phenylethene, 1-butene, 2-butene, 1-pentene, 1-hexene, 1-heptene, 1-octene, 2-octene, 4-octene, cyclohexene and norbornadiene.

The unsaturated compound may be carbonylated alone or in the presence of other reactants, for example, hydrogen or a nucleophilic compound having a removable hydrogen atom. An example of a nucleophilic compound having a removable hydrogen atom is a hydroxyl-containing compound.

A hydroxyl-containing compound is preferably an alcohol, water or a carboxylic acid.

Any alcohol used may be aliphatic, cycloaliphatic or aromatic and may carry one or more substituents. The alcohol preferably comprises up to 20 carbon atoms per molecule. It may be, for example, an alkanol, a cycloalkanol or a phenol. One or more hydroxyl groups may be present, in which case several products may be formed, depending on the molar ratio of the reactants used. Examples of alkanols include methanol, ethanol, 1-propanol, 2-propanol, 1-butanol, 2-butanol, 2-methylpropan-1-ol, and 2-methylpropan-2-ol.

The process according to the present invention can be carried out using a wide variety of carboxylic acids. For example, the carboxylic acids may be aliphatic, cycloaliphatic or aromatic and may carry one or more substituents, such as those named in connection with the acetylenically and olefinically unsaturated compounds. Carboxylic acids preferably used in the process according to the invention include those containing up to 20 carbon atoms, such as formic acid, acetic acid, propionic acid, benzoic acid or adipic acid.

When an acetylenically unsaturated compound is reacted with water and carbon monoxide, an alpha,beta-unsaturated carboxylic acid is formed. If an alcohol is used instead of water, an alpha,-beta-unsaturated carboxylic ester is formed. If a carboxylic acid is used instead of water, an alpha,beta-unsaturated anhydride is formed. The alpha,beta-unsaturated product may undergo further reaction depending upon the reaction conditions employed.

It has been found that catalyst compositions according to the invention are particularly useful for the carbonylation of alpha acetylenes with hydroxyl-containing compounds.

Accordingly, to a preferred aspect, therefore, the invention provides a process for the preparation of an alpha,beta-olefinically unsaturated compound, which comprises reacting an alpha acetylene with carbon monoxide and a hydroxyl-containing compound in the liquid phase in the presence of a carbonylation catalyst as hereinbefore described.

In the process, the carbonylation catalyst is preferably a palladium catalyst as described above, namely a catalyst which comprises:

a) a palladium compound,

b) a polyphosphine of general formula (I), and

c) a protonic acid.

It is not essential to use a separate solvent in the process according to the invention.

A large excess of the product or of one of the reactants, for example an alcohol, can often form a suitable liquid phase. In some cases, however, it may be desirable to use a separate solvent. Any inert solvent can be used for that purpose. Said solvent may, for example, comprise sulphoxides, sulphones, aromatic hydrocarbons, esters, ketones, ethers and amides.

The process according to the present invention is conveniently effected at a temperature in the range of from 10 °C to 200 °C, in particular from 20 °C to 130 °C, more preferably 25-80 °C.

The process according to the invention is preferably effected at a pressure of from 1 to 70 bar. Pressures higher than 100 bar may be used, but are generally economically unattractive on account of special apparatus requirements.

The molar ratio of the hydroxyl-containing compound to the unsaturated hydrocarbon may vary between wide limits and generally lies within the range of 0.01:1 to 100:1.

The quantity of the Group VIII metal is not critical. Preferably, quantities are used within the range of $10^{-7}$ to $10^{-1}$ gram atom Group VIII metal per mol of unsaturated compound.

The carbon monoxide required for the process according to the present invention may be used in a practically pure form or diluted with an inert gas, for example nitrogen. The presence of more than small quantities of hydrogen in the gas stream is undesirable on account of the hydrogenation of the unsaturated hydrocarbon which may occur under the reaction conditions. In general, it is preferred that the quantity of hydrogen in the gas stream supplied is less than 5 vol%.

The selectivity towards alpha,beta-olefinically unsaturated compounds, expressed as a percentage, is defined as

$$(a/b) \times 100$$

wherein "a" is the quantity of acetylenically unsaturated compound converted into alpha,beta-olefinically unsaturated compound and "b" is the total quantity of acetylenically unsaturated compound that has been converted.

The invention will now be illustrated by the following Preparation and Examples.

Unless otherwise stated, the allene content of any propyne used in the following examples was less than 50 ppm.

Preparation of 2,6-bis(diphenylphosphino) pyridine

To an effectively stirred solution of 13.1 g of triphenylphosphine (50 mmol) in 150 ml of dry THF under an argon atmosphere was added 0.75 g of lithium metal (107 mmol). When the reaction was complete after 2 hr, as established by $^{31}P$ NMR, the excess lithium was removed. Subsequently the dark brown solution was cooled to 0 °C. Thereupon, an amount of 3.4 g of tert-butanol (45.8 mmol) equivalent to the phenyl lithium present, was added, whereby the temperature increased to about 15 °C. Subsequently, 3.52 g of 2,6-dichloropyridine (23.8 mmol) was added, and the temperature was allowed to rise. The mixture obtained was worked up by distillation of THF at reflux and atmospheric pressure, vacuum drying, addition of 50 ml of 3M aqueous ammonium chloride solution and 50 ml of dichloromethane, phase separation, washing, filtration of the combined organic phases, vacuum concentration, and recrystallization from boiling hexane. After cooling to ambient temperature 7.8 g of white crystalline 2,6-bis(diphenylphosphino) pyridine (yield 73.4 %, purity 97.5%) was collected by filtration.

Example 1

A 250 ml magnetically stirred stainless steel autoclave was successively filled with 0.025 mmol palladium(II) acetate, 1 mmol 2,6-bis(diphenylphosphino) pyridine, 1 mmol methanesulphonic acid, and 50 ml methanol. Air was evacuated from the autoclave, whereupon 30 ml propyne was added. Subsequently, carbon monoxide was added to a pressure of 60 bar. The autoclave was sealed and an exotherm was observed heating the reaction mixture to an average temperature of 45 °C over the reaction period. After completion of the reaction by depletion of propyne, a specimen of the contents was analysed by means of gas liquid chromatography. The selectivity of the conversion of propyne to methyl methacrylate was found to be 99.92 % while the mean conversion rate was calculated to be above 100,000 mol propyne per gram atom palladium per hour.

Example 2

The experiment as described in Example 1 was repeated in substantially the same manner with a catalyst system composed of 0.025 mmol palladium(II) acetate, 0.25 mmol 2,6-bis(diphenylphosphino) pyridine, and

0.25 mmol methanesulphonic acid. Upon sealing of the autoclave, an exotherm raising the temperature to averagely 50 °C was observed. After a reaction time of 0.25 hour, analysis of a specimen of the contents showed a selectivity of the conversion of propyne to methyl methacrylate of 99.92 %. A mean conversion rate of 50,000 mol/gat Pd/hour was calculated.

Examples 3 to 4 and Comparative Examples A to B

The method of Example 2 was repeated using 2,6-bis(diphenylphosphino) pyridine (2,6-PNP) and, for comparison, 2-diphenylphosphino pyridine (2-PN), respectively, as ligand for the catalyst system in the amounts indicated and using a reaction temperature of 22 °C. The conversion rate was calculated from the change of CO pressure over the first 3 hours of the reaction, and the selectivities were obtained by GLC analysis. The results are summarized in Table 1.

By comparing Example 4 with Comparative Example A, it is seen that a ten times higher conversion rate is achievable using the polyphosphine ligand in accordance with the invention at a molar ratio of ligand to palladium of 10:1. From Example 3, it will be appreciated that the 2,6-PNP to palladium ratio could be lowered to 5:1 with still good propyne conversion rates. Comparative Example B shows that under the present carbonylation conditions, the use of 20 moles of 2-PN per gram atom of palladium per hour resulted in a conversion rate unfavorably comparing with the results for the ligand according to the invention.

Table 1

Carbonylation of Propyne and Methanol into Methyl methacrylate

| Example | Ligand (mmol) | Acid (mmol) | Selectivity (%) | Mean Conversion Rate (mol propyne/gat Pd/hour) |
|---|---|---|---|---|
| 3 | 2,6-PNP (0.125) | $CH_3SO_3H$ (0.125) | 99.92 | 3,000 |
| 4 | 2,6-PNP (0.25) | $CH_3SO_3H$ (0.25) | 99.92 | 5,000 |
| A | 2-PN (0.25) | $CH_3SO_3H$ (0.25) | 99.3 | < 500 |
| B | 2-PN (0.5) | $CH_3SO_3H$ (0.25) | 99.4 | 1,000 |

Note: 0.025 mmol $Pd(OAc)_2$, 30 ml propyne, 50 ml methanol, 60 bar CO, 22 °C.

Example 5

The method of Example 3 was repeated using a catalyst system composed of 0.025 mmol palladium(II) acetate, 0.25 mmol 2,6-bis(diphenylphosphino) pyridine, and 1 mmol $BF_3.Et_2O$, from which the protonic acid $H^+BF_3(CH_3O)^-$ is formed in situ by reaction with methanol. Upon a reaction time of 3 hours at 25 °C, a propyne conversion rate of 2700 mol/gat Pd/hour, and a selectivity to methyl methacrylate of 99.92 % were observed.

Example 6

A 250 ml magnetically stirred stainless steel autoclave was successively filled with 0.025 mmol palladium(II) acetate, 0.25 mmol 2,6-bis(diphenylphosphino) pyridine, 0.25 mmol methane-sulphonic acid, 30 ml phenylethyne and 30 ml methanol. Air was evacuated from the autoclave, whereupon carbon monoxide was added to a pressure of 60 bar. The autoclave was sealed and an exotherm was observed heating the reaction mixture to an average temperature of 32 °C over the reaction period. After a reaction time of 0.5 hour, a specimen of the contents was analysed by means of gas liquid chromatography. The selectivity of the conversion of propyne to methyl 1-phenylacrylate was found to be 99.93 % while the mean conversion rate was calculated to be 20,000 mol propyne per gram atom palladium per hour.

## Claims

**Claims for the following Contracting States : BE, DE, FR, GB, IT, NL**

1. A catalyst system, which comprises
   a) a source of a Group VIII metal, and
   b) a polyphosphine of general formula:

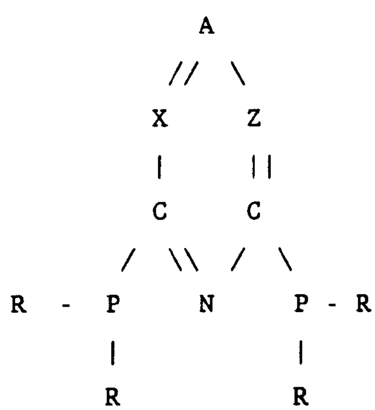

(I)

in which

each R is independently selected from an optionally substituted alkyl, cycloalkyl, aryl or heteroaryl group; and

each of A, X and Z is independently selected from a nitrogen atom, a CH group, a group of formula $C-PR_2$ with R being defined as hereinbefore, and a group of formula CR', wherein R' represents a hydroxyl group, an amino group, an amido group, a cyano group, an acyl group, an acyloxy group, a halogen atom, an optionally substituted hydrocarbyl group, an optionally substituted heteroaryl group or an optionally substituted hydrocarbyloxy group, it also being possible for two adjacent CR' groups to form a ring;

or an acid addition salt thereof.

2. A catalyst system as claimed in claim 1, wherein at least one of X and Z is nitrogen, and A is a group $C-PR_2$.

3. A catalyst system as claimed in claim 1, wherein each of X,Z, and A is independently selected from a CH group and a group of formula CR'.

4. A catalyst system as claimed in any one or more of claims 1-3, wherein each group R' is independently

selected from a halogen atom, a $C_{1-4}$ alkyl group and a $C_{1-4}$ alkoxy group.

**5.** A catalyst system as claimed in any one or more of claims 1-4, wherein each group R independently represents an optionally substituted phenyl group.

**6.** A catalyst system as claimed in any one or more of claims 1-5, wherein the source of a Group VIII metal is a compound of palladium.

**7.** A catalyst system as claimed in any one or more of claims 1-6, wherein the number of moles of polyphosphine of general formula (I) per gram atom of Group VIII metal is in the range of 1 to 50, more preferably in the range of 2 to 20.

**8.** A catalyst system as claimed in any one or more of claims 1-7, wherein a protonic acid is present in an amount in the range of from 0.5 to 5 equivalents per equivalent of polyphosphine of general formula (I).

**9.** A polyphosphine of general formula (I) as defined in claim 1, or an acid addition salt thereof, except for 2,6-bis(diphenylphosphino) pyridine.

**10.** Use of a catalyst system as defined in claim 1 in the carbonylation of an acetylenically of ethylenically unsaturated hydrocarbon.

**11.** A process for the preparation of an alpha,beta-olefinically unsaturated compound, which comprises reacting an alpha acetylene with carbon monoxide and a hydroxyl-containing compound in the presence of a carbonylation catalyst system as defined in claim 1.

**12.** A process as claimed in claim 11, wherein the carbonylation catalyst system comprises:
a) a palladium compound,
b) a polyphosphine of general formula 1, as defined in claim 1, and
c) a protonic acid.

**13.** A process as claimed in claim 11 or 12, wherein methyl methacrylate is prepared by reacting propyne with carbon monoxide and methanol.

**Claims for the following Contracting State : ES**

**1.** A process for preparing a catalyst system, which comprises combining
a) a source of a Group VIII metal, and
b) a polyphosphine of general formula:

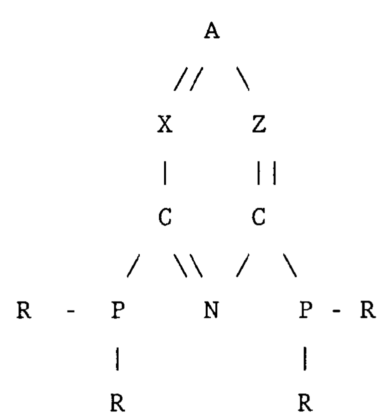

(I)

in which

each R is independently selected from an optionally substituted alkyl, cycloalkyl, aryl or heteroaryl group; and

each of A, X and Z is independently selected from a nitrogen atom, a CH group, a group of formula $C\text{-}PR_2$ with R being defined as hereinbefore, and a group of formula CR', wherein R' represents a hydroxyl group, an amino group, an amido group, a cyano group, an acyl group, an acyloxy group, a halogen atom,

an optionally substituted hydrocarbyl group, an optionally substituted heteroaryl group or an optionally substituted hydrocarbyloxy group, it also being possible for two adjacent CR' groups to form a ring; or an acid addition salt thereof.

2. A process as claimed in claim 1, wherein at least one of X and Z is nitrogen, and A is a group $C\text{-}PR_2$.

3. A process as claimed in claim 1, wherein each of X,Z, and A is independently selected from a CH group and a group of formula CR'.

4. A process as claimed in any one or more of claims 1-3, wherein each group R' is independently selected from a halogen atom, a $C_{1-4}$ alkyl group and a $C_{1-4}$ alkoxy group.

5. A process as claimed in any one or more of claims 1-4, wherein each group R independently represents an optionally substituted phenyl group.

6. A process as claimed in any one or more of claims 1-5, wherein the source of a Group VIII metal is a compound of palladium.

7. A process as claimed in any one or more of claims 1-6, wherein the number of moles of polyphosphine of general formula (I) per gram atom of Group VIII metal is in the range of 1 to 50, more preferably in the range of 2 to 20.

8. A process as claimed in any one or more of claims 1-7, wherein a protonic acid is present in an amount in the range of from 0.5 to 5 equivalents per equivalent of polyphosphine of general formula (I).

9. A polyphosphine of general formula (I) as prepared by the process of claim 1, or an acid addition salt thereof, except for 2,6-bis(diphenylphosphino) pyridine.

10. Use of a catalyst system as defined in claim 1 in the carbonylation of an acetylenically of ethylenically unsaturated hydrocarbon.

11. A process for the preparation of an alpha,beta-olefinically unsaturated compound, which comprises reacting an alpha acetylene with carbon monoxide and a hydroxyl-containing compound in the presence of a carbonylation catalyst system as defined in claim 1.

12. A process as claimed in claim 11, wherein the carbonylation catalyst system comprises:
    a) a palladium compound,
    b) a polyphosphine of general formula 1, as defined in claim 1, and
    c) a protonic acid.

13. A process as claimed in claim 11 or 12, wherein methyl methacrylate is prepared by reacting propyne with carbon monoxide and methanol.

## Patentansprüche

### Patentansprüche für folgende Vertragsstaaten : BE, DE, FR, GB, IT, NL

1. Ein Katalysatorsystem, welches umfaßt
    a) eine Quelle für ein Metall der Gruppe VIII, und
    b) ein Polyphosphin der allgemeinen Formel

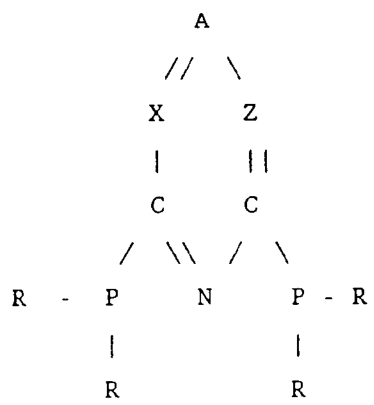

(I)

oder ein Säureadditionssalz davon,
in welcher Formel jedes R unabhängig ausgewählt ist aus einer gegebenenfalls substituierten Alkyl-, Cycloalkyl-, Aryl- oder Heteroarylgruppe; und A, X und Z jeweils unabhängig ausgewählt sind aus einem Stickstoffatom, einer CH-Gruppe, einer Gruppe der Formel C-$PR_2$, wobei R wie oben definiert ist, und einer Gruppe der Formel CR', wobei R' eine Hydroxylgruppe, eine Aminogruppe, eine Amidogruppe, eine Cyanogruppe, eine Acylgruppe, eine Acyloxygruppe, ein Halogenatom, eine gegebenenfalls substituierte Kohlenwasserstoffgruppe, eine gegebenenfalls substituierte Heteroarylgruppe oder eine gegebenenfalls substituierte Kohlenwasserstoffoxygruppe darstellt, wobei es auch möglich ist, daß zwei benachbarte CR'-Gruppen einen Ring bilden.

**2.** Ein Katalysatorsystem wie in Anspruch 1 beansprucht, in welchem mindestens eine der Gruppen X und Z Stickstoff ist und A eine Gruppe C-$PR_2$ ist.

**3.** Ein Katalysatorsystem, wie in Anspruch 1 beansprucht, in welchem jede der Gruppen X, Z und A unabhängig ausgewählt ist aus einer CH-Gruppe und einer Gruppe der Formel CR'.

**4.** Ein Katalysatorsystem, wie in einem oder mehreren der Ansprüche 1 bis 3 beansprucht, in welchem jede Gruppe R' unabhängig ausgewählt ist aus einem Halogenatom, einer $C_{1-4}$-Alkylgruppe und einer $C_{1-4}$-Alkoxygruppe.

**5.** Ein Katalysatorsystem, wie in einem oder mehreren der Ansprüche 1 bis 4 beansprucht, in welchem jede Gruppe R unabhängig eine gegebenenfalls substituierte Phenylgruppe darstellt.

**6.** Ein Katalysatorsystem, wie in einem oder mehreren der Ansprüche 1 bis 5 beansprucht, in welchem die Quelle eines Metalls der Gruppe VIII eine Verbindung von Palladium ist.

**7.** Ein Katalysatorsystem, wie in einem oder mehreren der Ansprüche 1 bis 6 beansprucht, in welchem die Anzahl von Mol an Polyphosphin der allgemeinen Formel (I) je Grammatom des Metalls der Gruppe VIII im Bereich vo 1 bis 50, mehr bevorzugt im Bereich von 2 bis 20, liegt.

**8.** Ein Katalysatorsystem, wie in einem oder mehreren der Ansprüche 1 bis 7 beansprucht, in welchem eine Protonensäure in einer Menge im Bereich von 0,5 bis 5 Äquivalente je Äquivalent Polyphosphin der allgemeinen Formel (I) vorliegt.

**9.** Ein Polyphosphin der allgemeinen Formel (I), wie in Anspruch 1 definiert , oder ein Säureadditionssalz davon, mit Ausnahme von 2,6-Bis(diphenylphosphino)pyridin.

**10.** Verwendung eines Katalysatorsystems, wie in Anspruch 1 definiert, beim Carbonylieren eines acetylenisch oder ethylenisch ungesättigten Kohlenwasserstoffs.

**11.** Ein Verfahren zur Herstellung einer alpha,beta-olefinisch ungesättigten Verbindung, welches die Umsetzung eines alpha-Acetylens mit Kohlenmonoxid und einer hydroxyl-haltigen Verbindung in Gegenwart eines Carbonylierungskatalysatorsystems, wie in Anspruch 1 definiert, umfaßt.

**12.** Ein Verfahren, wie in Anspruch 11 beansprucht, in welchem dsa Carbonylierungskatalysatorsystem
a) eine Palladiumverbindung,
b) ein Polyphosphin der allgemeinen Formel I, wie in Anspruch 1 definiert, und
c) eine Protonensäure
umfaßt.

**13.** Ein Verfahren, wie in Anspruch 11 oder 12 beansprucht, in welchem Methylmethacrylat durch Umsetzen von Propin mit Kohlenmonoxid und Methanol hergestellt wird.

**Patentansprüche für folgenden Vertragsstaat : ES**

**1.** Ein Verfahren zur Herstellung eines Katalysatorsystems, welches das Kombinieren
a) einer Quelle für ein Metall der Gruppe VIII, und
b) eines Polyphosphins der allgemeinen Formel

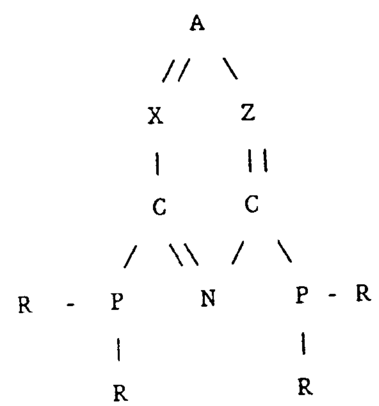

(I)

oder eines Säureadditionssalzes davon umfaßt,
in welcher Formel jedes R unabhängig ausgewählt ist aus einer gegebenenfalls substituierten Alkyl-, Cycloalkyl-, Aryl- oder Heteroarylgruppe; und A, X und Z jeweils unabhängig ausgewählt sind aus einem Stickstoffatom, einer CH-Gruppe, einer Gruppe der Formel C-$PR_2$, wobei R wie oben definiert ist, und einer Gruppe der Formel CR', wobei R' eine Hydroxylgruppe, eine Aminogruppe, eine Amidogruppe, eine Cyanogruppe, eine Acylgruppe, eine Acyloxygruppe, ein Halogenatom, eine gegebenenfalls substituierte Kohlenwasserstoffgruppe, eine gegebenenfalls substituierte Heteroarylgruppe oder eine gegebenenfalls substituierte Kohlenwasserstoffoxygruppe darstellt, wobei es auch möglich ist, daß zwei benachbarte CR'-Gruppen einen Ring bilden.

**2.** Ein Verfahren wie in Anspruch 1 beansprucht, in welchem mindestens eine der Gruppen X und Z Stickstoff ist und A eine Gruppe C-$PR_2$ ist.

**3.** Ein Verfahren, wie in Anspruch 1 beansprucht, in welchem jede der Gruppen X, Z und A unabhängig ausgewählt ist aus einer CH-Gruppe und einer Gruppe der Formel CR'.

**4.** Ein Verfahren, wie in einem oder mehreren der Ansprüche 1 bis 3 beansprucht, in welchem jede Gruppe R' unabhängig ausgewählt ist aus einem Halogenatom, einer $C_{1-4}$-Alkylgruppe und einer $C_{1-4}$-Alkoxygruppe.

**5.** Ein Verfahren, wie in einem oder mehreren der Ansprüche 1 bis 4 beansprucht, in welchem jede Gruppe R unabhängig eine gegebenenfalls substituierte Phenylgruppe darstellt.

**6.** Ein Verfahren, wie in einem oder mehreren der Ansprüche 1 bis 5 beansprucht, in welchem die Quelle eines Metalls der Gruppe VIII eine Verbindung von Palladium ist.

**7.** Ein Verfahren, wie in einem oder mehreren der Ansprüche 1 bis 6 beansprucht, in welchem die Anzahl von Mol an Polyphosphin der allgemeinen Formel (I) je Grammatom des Metalls der Gruppe VIII im Bereich von 1 bis 50, mehr bevorzugt im Bereich von 2 bis 20, liegt.

8. Ein Verfahren, wie in einem oder mehreren der Ansprüche 1 bis 7 beansprucht, in welchem eine Protonensäure in einer Menge im Bereich von 0,5 bis 5 Äquivalente je Äquivalent Polyphosphin der allgemeinen Formel (I) vorliegt.

9. Ein Polyphosphin der allgemeinen Formel (I), hergestellt gemäß dem Verfahren von Anspruch 1, oder ein Säureadditionssalz davon, mit Ausnahme von 2,6-Bis(diphenylphosphino)pyridin.

10. Verwendung eines Katalysatorsystems, wie in Anspruch 1 definiert, beim Carbonylieren eines acetylenisch oder ethylenisch ungesättigten Kohlenwasserstoffs.

11. Ein Verfahren zur Herstellung einer alpha,beta-olefinisch ungesättigten Verbindung, welches die Umsetzung eines alpha-Acetylens mit Kohlenmonoxid und einer hydroxyl-haltigen Verbindung in Gegenwart eines Carbonylierungskatalysatorsystems, wie in Anspruch 1 definiert, umfaßt.

12. Ein Verfahren, wie in Anspruch 11 beansprucht, in welchem das Carbonylierungskatalysatorsystem
   a) eine Palladiumverbindung,
   b) ein Polyphosphin der allgemeinen Formel I, wie in Anspruch 1 definiert, und
   c) eine Protonensäure
   umfaßt.

13. Ein Verfahren, wie in Anspruch 11 oder 12 beansprucht, in welchem Methylmethacrylat durch Umsetzen von Propin mit Kohlenmonoxid und Methanol hergestellt wird.

## Revendications

**Revendications pour les Etats contractants suivants : BE, DE, FR, GB, IT, NL**

1. Un système catalytique, qui comprend
   a) une source d'un métal du groupe VIII et
   b) une polyphosphine de formule générale :

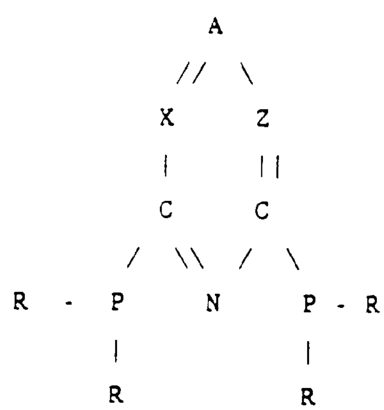

(I)

où

chaque R est choisi indépendamment parmi un groupe alcoyle, cycloalcoyle, aryle ou hétéroaryle éventuellement substitué ; et

chacun de A, X et Z est choisi indépendamment parmi un atome d'azote, un groupe CH, un groupe de formule $C\text{-}PR_2$, où R est tel que défini ci-dessus, et un groupe de formule CR', où R' représente un groupe hydroxyle, un groupe amino, un groupe amido, un groupe cyano, un groupe acyle, un groupe acyloxy, un atome d'halogène, un groupe hydrocarbyle éventuellement substitué, un groupe hétéroaryle éventuellement substitué ou un groupe hydrocarbyloxy éventuellement substitué, étant possible aussi que deux groupes CR' adjacents forment un noyau ; ou un sel d'addition d'acide d'un tel composé.

2. Un système catalytique selon la revendication 1, dans lequel au moins un de X et Z est de l'azote et A est un groupe $C\text{-}PR_2$.

3. Un système catalytique selon la revendication 1, dans lequel chacun de X, Z et A est choisi indépendamment parmi un groupe CH et un groupe de formule CR'.

4. Un système catalytique selon une ou plusieurs quelconques des revendications 1-3, dans lequel chaque groupe R' est choisi indépendamment parmi un atome d'halogène, un groupe alcoyle en $C_{1-4}$ et un groupe alcoxy en $C_{1-4}$.

5. Un système catalytique selon une ou plusieurs quelconques des revendications 1-4, dans lequel chaque groupe R indépendamment représente un groupe phényle éventuellement substitué.

6. Un système catalytique selon une ou plusieurs quelconques des revendications 1-5, dans lequel la source d'un métal du groupe VIII est un composé du palladium.

7. Un système catalytique selon une ou plusieurs quelconques des revendications 1-6, dans lequel le nombre de moles de polyphosphine de formule générale (I) par atome-gramme de métal du groupe VIII est compris entre 1 et 50, de préférence entre 2 et 20.

8. Un système catalytique selon une ou plusieurs quelconques des revendications 1-7, dans lequel un acide protonique est présent à raison d'une quantité comprise entre 0,5 et 5 équivalents par équivalent de polyphosphine de formule générale (I).

9. Une polyphosphine de formule générale (I) telle que définie dans la revendication 1 ou un sel d'addition d'acide d'un tel composé, à l'exception de la 2,6-bis(diphénylphosphino) pyridine.

10. L'utilisation d'un système catalytique tel que défini dans la revendication 1 dans la carbonylation d'un hydrocarbure acétyléniquement ou éthyléniquement insaturé.

11. Un procédé pour la préparation d'un composé oléfiniquement insaturé en alpha,bêta, qui comprend la réaction d'un alpha-acétylène avec l'oxyde de carbone et un composé hydroxylé en présence d'un système catalytique pour carbonylation tel que défini dans la revendication 1.

12. Un procédé selon la revendication 11, dans lequel le système catalytique pour carbonylation comprend :
    a) un composé du palladium,
    b) une polyphosphine de formule générale (I), telle que définie dans la revendication 1, et
    c) un acide protonique.

13. Un procédé selon la revendication 11 ou 12, dans lequel on prépare du méthacrylate de méthyle en faisant réagir du propyne avec de l'oxyde de carbone et du méthanol.

**Revendications pour l'Etat contractant suivant : ES**

1. Un procédé pour la préparation d'un système catalytique, selon lequel on combine
    a) une source d'un métal du groupe VIII et
    b) une polyphosphine de formule générale

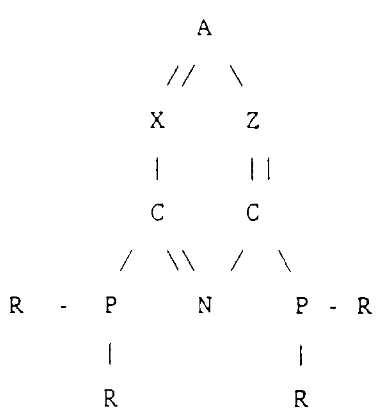

(I)

où

chaque R est choisi indépendamment parmi un groupe alcoyle, cycloalcoyle, aryle ou hétéroaryle éventuellement substitué ; et

chacun de A, X et Z est choisi indépendamment parmi un atome d'azote, un groupe CH, un groupe de formule C-$PR_2$, R étant tel que défini ci-dessus, et un groupe de formule CR', où R' représente un groupe hydroxyle, un groupe amino, un groupe amido, un groupe cyano, un groupe acyle, un groupe -cyloxy, un atome d'halogène, un groupe hydrocarbyle éventuellement substitué, un groupe hétéroaryle éventuellement substitué ou un groupe hydrocarbyloxy éventuellement substitué, étant possible aussi que deux groupes CR' adjacents forment un noyau ; ou un sel d'addition d'acide d'un tel composé.

**2.** Un procédé selon la revendication 1, dans lequel au moins un de X et Z est de l'azote, et A est un groupe C-$PR_2$.

**3.** Un procédé selon la revendication 1, dans lequel chacun de X, Z et A est choisi indépendamment parmi un groupe CH et un groupe de formule CR'.

**4.** Un procédé selon une ou plusieurs quelconques des revendications 1-3, dans lequel chaque R' est choisi indépendamment parmi un atome d'halogène, un groupe alcoyle en $C_{1-4}$ et un groupe alcoxy en $C_{1-4}$.

**5.** Un procédé selon une ou plusieurs quelconques des revendications 1-4, dans lequel chaque groupe R indépendamment représente un groupe phényle éventuellement substitué.

**6.** Un procédé selon une ou plusieurs quelconques des revendications 1-5, dans lequel la source d'un métal du groupe VIII est un composé du palladium.

**7.** Un procédé selon une ou plusieurs quelconques des revendications 1-6, dans lequel le nombre de moles de polyphosphine de formule générale (I) par atome-gramme de métal du groupe VIII est compris entre 1 et 50, de préférence entre 2 et 20.

**8.** Un procédé selon une ou plusieurs quelconques des revendications 1-7, dans lequel un acide protonique est présent dans une quantité comprise entre 0,5 et 5 équivalents par équivalent de polyphosphine de formule générale (I).

**9.** Une polyphosphine de formule générale (1) telle que préparée par le procédé selon la revendication 1, ou un sel d'addition d'acide d'un tel composé, à l'exception de la 2,6-bis(diphénylphosphino) pyridine.

**10.** L'utilisation d'un système catalytique tel que défini dans la revendication 1 dans la carbonylation d'un hydrocarbure acétyléniquement ou éthyléniquement insaturé.

**11.** Un procédé pour la préparation d'un composé oléfiniquement insaturé en alpha,bêta, qui comprend la réaction d'un alpha-acétylène avec l'oxyde de carbone et un composé hydroxylé en présence d'un système catalytique pour carbonylation tel que défini dans la revendication 1.

**12.** Un procédé selon la revendication 11, dans lequel le système catalytique pour carbonylation comprend :
a) un composé du palladium,
b) une polyphosphine de formule générale (I) telle que définie dans la revendication 1, et
c) un acide protonique.

**13.** Un procédé selon la revendication 11 ou 12, dans lequel on prépare du méthacrylate de méthyle en faisant réagir du propyne avec de l'oxyde de carbone et du méthanol.